# EUROPÄISCHE PATENTSCHRIFT

(11) **EP 2 578 123 B1**
(45) Veröffentlichungstag und Bekanntmachung des Hinweises auf die Patenterteilung: **03.12.2014**
(21) Anmeldenummer: 12187299.8
(22) Anmeldetag: 04.10.2012
(51) Int. Cl.: A47J 42/50, A47J 31/42

(54) **Kaffeeautomat und Verfahren zum Einbringen einer Bohnenmenge**
Coffee machine and method for inserting a quantity of beans
Machine à café et procédé d'alimentation d'une quantité de grains

(30) Priorität: 04.10.2011 DE 102011054169
(43) Veröffentlichungstag der Anmeldung: 10.04.2013
(73) Patentinhaber: Eugster/Frismag AG, 8580 Amriswil (CH)
(72) Erfinder: Riessbeck, Wolfgang, 8597 Landschlacht (CH); Wäger, Simon, 8580 Amriswil (CH)
(74) Vertreter: Behrmann, Niels

(56) Entgegenhaltungen:
- EP-A1- 0 605 750
- WO-A1-01/48711
- DE-A1-102004 024 713
- DE-C- 659 937
- US-A- 5 241 898

## Beschreibung

Die vorliegende Erfindung betrifft einen Kaffeeautomaten nach dem Oberbegriff des Hauptanspruchs. Ferner betrifft die vorliegende Erfindung ein Verfahren zum Einbringen einer vorbestimmten Bohnenmenge aus einer Mehrzahl von Bohnenbehältern in eine gemeinsame Mahleinheit, insbesondere ein Verfahren zum Betreiben eines gattungsgemäßen Kaffeeautomaten.

Derartige Kaffeeautomaten, nachfolgend auch als Kaffee-Vollautomaten bezeichnet, sind aus dem Stand der Technik allgemein bekannt und setzen in Bohnenbehältern enthaltene Kaffeebohnen nach Mahl- und Brühschritten durch entsprechend zugeordnete Funktionseinheiten in ein trinkfähiges Kaffeegetränk um. Dabei erfolgt, typischerweise als Reaktion auf eine Auswahl aus einer Mehrzahl von möglichen Kaffeebohnensorten (einer entsprechend zugeordneten Mehrzahl von Bohnenbehältern), die weitere Verarbeitung bis zum trinkfähigen Heißgetränk automatisch, ohne dass eine Bedienperson in diesen Ablauf eingreifen muss.

Die Qualität des trinkbereiten, mit einer solchen Vorrichtung erfolgten Produktes wird dabei nicht nur von der verwendeten Bohnensorte (bzw. dessen Bedingungen, etwa Frische, Feuchtigkeitsgehalt od. dgl.) bestimmt auch sind die nachfolgenden Verarbeitungsschritte Mahlen und Brühen kritisch für den Geschmacks- und damit Qualitätseindruck des mit dem gattungsgemäßen Kaffeeautomaten bereiteten Getränks.

So bestimmt etwa die Menge von in das Mahlwerk einer Mahleinheit eingebrachten Kaffeebohnen diesen Geschmackseindruck, so dass im Rahmen des Kaffee-Vollautomaten der Fördervorgang der (noch ungemahlenen) Kaffeebohnen aus einem ausgewählten einer Mehrzahl von Bohnenbehältern zum (typischerweise gemeinsamen) Mahlwerk der Mahleinheit ein kritischer, geeignet apparativ einzurichtender Prozess ist.

Aus dem Stand der Technik ist es dabei bekannt, Kaffeebohnenbehälter umschaltbar auszugestalten, wie es etwa in der DE 20 2008 001 749 U1 der Anmelderin beschrieben ist. In hier konstruktiv besonders elegant und kompakt gelöster Weise wird mittels manuell betätigbarer Auswahlmittel zwischen den die jeweils gewünschte Bohnensorte bereitstellenden Behältern ausgewählt, und entsprechend einer Auswahlposition der Auswahlmittel erfolgt dann das Freigeben eines betreffenden Auslasses eines gewählten Bohnenbehälters zum Mahlwerk. Dieses wird entsprechend einlassseitig mit den Bohnen gefüllt und in einen Mahlbetrieb angesteuert, so dass ausgangsseitig der Mahleinheit dann brühfähiges Kaffeepulver (der ausgewählten Bohnensorte) zur Verfügung steht.

Eine derartige, als gattungsbildend vorausgesetzte Technologie hat sich als robust und großserientauglich bewährt, gleichzeitig gibt es zumindest in zweifacher Hinsicht Nachbesserungspotenzial: Zum Einen erfolgt, wie beschrieben, die Auswahl der zur Mahleinheit (im Wesentlichen im Wege einer Schütteinheit als Fördermittel) zu bringenden Bohnensorte durch manuelle Betätigung eines Umschalters; hier ist eine Automatisierung (im Rahmen des konstruktiven Prinzips) nur mit erhöhtem Aufwand möglich. Zudem, als zweiter Problemkomplex, entstehen nachteilige Zwischen- bzw. Totmengen an Kaffeebohnen im Einlassbereich der Mahleinheit beim Umschalten, mit dem Ergebnis, dass die Mahleinheit typischerweise noch einen Rest an Bohnen einer vorab gewählten Sorte vermahlen muss, bevor dann die eigentlich ausgewählten Bohnen (einer anderen Sorte eines anderen Behälters) nachrutschen. Da zudem die eigentliche Dosierung des Kaffeemehls durch eine geeignete Zeitvorgabe bzw. Zeitsteuerung eines Mahlbetriebs der Mahleinheit erfolgt, ist gerade bei häufig wechselnder Wahl der Bohnenbehälter ein durch die Mahleinheit ausgebrachtes und nachfolgend dann zu verbrühendes Kaffeemehl nicht rein entsprechend der diesbezüglich gewählten Sorte; vielmehr sind teilweise sogar mehrere Brühvorgänge erforderlich, bis tatsächlich auch im Hinblick auf das Ausgangsprodukt der Mahleinheit die eingangs vorhandenen Rest- bzw. Totvolumina der Bohnen aufgebraucht sind.

Im Ergebnis zeigen als gattungsbildend vorausgesetzte Kaffeeautomaten Nachteile bei der Sortentreue des ausgewählten Kaffeemehls, insbesondere bei häufig wechselnden Bohnensorten aus jeweils verschiedenen Bohnenbehältern.

Aus der EP 0 605 750 A1 ist ferner ein Kaffeeautomat nach dem Oberbegriff des Hauptanspruch bekannt, welcher als Dosiereinheit ausgebildete Fördermittel aufweist, denen eine mittels einer Antriebseinheit beweg- und positionierbare Dosierkammer konstanten Kammervolumens zugeordnet ist. Deren Bohnen-Dosiervolumen ist durch einen eine Eintragsposition bestimmenden variablen Bewegungshub der Dosierkammerbewegung einstell- und bestimmbar. Ferner weist die Dosiereinheit Austragungsmittel zum Entleeren der Dosierkammer zur Mahleinheit auf, die in einer von der Eintragsposition verschiedenen Austragsposition der Dosierkammer ein gravitatives Austragen bewirken, und die Antriebseinheit ist zum Bewegen und Positionieren der Dosierkammer entlang einer Bewegungslängsachse ausgebildet.

Aufgabe der vorliegenden Erfindung ist es, einen gattungsgemäßen Kaffeeautomaten sowohl im Hinblick auf die Automatisierbarkeit der Auswahl verschiedener Bohnenbehälter für das Eintragen von Bohnen in eine gemeinsame Mahleinheit zu verbessern, als auch eine sortenreine Portionierung von Bohnen in die Mahleinheit sicherzustellen bzw. ein sortenrein gemahlenes Mehl für eine jeweils ausgewählte Kaffeeportion des Kaffeeautomaten sicherzustellen. Dabei soll die zu findende Lösung konstruktiv einfach in der Herstellung, damit robust im Dauerbetrieb und verschleißarm sein. Ferner sind entstehende Stäube oder dergleichen zu minimieren, so dass zusätzlich die Reinigungsanforderungen an einen solchen verbesserten Kaffeeautomaten herabgesetzt werden können.

Die Aufgabe wird durch den Kaffeeautomaten mit den Merkmalen des Hauptanspruchs gelöst, vorteilhafte Weiterbildungen der Erfindung sind in den Unteransprüchen beschrieben. Ferner wird die vorliegende Erfindung durch das Verfahren nach dem Anspruch 10 gelöst, wobei dieser Aspekt der Erfindung günstig für den Betrieb des hauptanspruchgemäßen Kaffeeautomaten ist.

In erfindungsgemäß vorteilhafter Weise ist für die als Dosiereinheit ausgebildeten Fördermittel eine Dosierkammer konstanten Kammervolumens vorgesehen, welche mittels einer Antriebseinheit beweg- und positionierbar ist. Dabei bedeutet "eine" Dosierkammer, dass prinzipiell die Erfindung mit lediglich einer (für alle Bohnenbehälter gemeinsamen) Dosierkammer realisierbar wäre, eine bevorzugte Realisierungsform der Erfindung jedoch vorsieht, dass jedem der Mehrzahl der Bohnenbehälter (bzw. jedem zugehörigen Auslass eines Bohnenbehälters) eine gesonderte Dosierkammer zugeordnet ist.

Während diese erfindungsgemäße Dosierkammer, insbesondere bestimmt durch physische Abmessungen eines die Dosierkammer ausbildenden Körpers, ein konstantes Kammervolumen aufweist (welches insoweit ein maximales Füll- bzw. Dosiervolumen beschreibt), ist gleichwohl im Rahmen der Erfindung vorgesehen, eine tatsächliche Bohneneintragsmenge in diese Dosierkammer (als Bohnen-Dosiervolumen) variabel und veränderlich zu gestalten. Genauer gesagt geschieht dies im Rahmen der Erfindung durch eine Veränderung einer Eintragsposition der (jeweiligen) Dosierkammer relativ zu einem (zugehörigen) Auslass eines Bohnenbehälters, wobei durch diese Positionierung sich dann, weiter beeinflusst durch Eigenschaften der einzutragenden Bohnen (wie etwa ein jeweilige Schüttverhalten) das jeweilige Bohnen-Dosiervolumen ergibt. Damit ist es zunächst vorteilhaft und erfindungsgemäß sichergestellt, dass durch den (einfach steuer- und damit automatisierbaren) Bewegungshub der Dosierkammerbewegung dieses Bohnen-Dosiervolumen voreinstellbar ist, etwa im Hinblick auf eine jeweilige optimale Bohnenmenge einer ausgewählten Kaffeesorte und/oder eine gewünschte Geschmacksstärke eines betreffenden Kaffees.

Die Dosierkammer ist dann in eine Austragsposition bewegbar, an welcher die Dosierkammer (genauer: das darin eingetragene Bohnen-Dosiervolumen) vollständig in Richtung auf die nachgeschaltete Mahleinheit entleert wird, mit der Wirkung, dass mit diesem Austragen keine Kaffeebohnen mehr in der Dosierkammer verbleiben und entsprechend eine genau bemessene Charge, des ausgewählten Bohnentyps (und nur dieses Bohnentyps) zur Mahleinheit gelangt.

Vorteilhaft gestattet es die Erfindung damit, dass nun diese vorbestimmte Bohnenmenge ("Bohnen-Dosiervolumen"), entsprechend der vorstehenden, variablen Positionierung der Dosierkammer in der Eintragsposition, als solche zur Mahleinheit gelangt und vollständig und restlos vermahlen werden kann. Damit liegt dann auch am Ausgang der Mahleinheit ein sortenreines Kaffeemehlprodukt vor. Zusätzlich ergibt sich vorteilhaft, dass durch die feststehende, der Mahleinheit zugeführte Bohnenmenge eine aufwändige, prozesstechnisch nur schwierig beherrschbare Steuerung etwa einer Dauer des Vermahlen zur Dosierung einer Menge gewünschten Kaffeemehls entfällt; diese Menge ist durch das Bohnen-Dosiervolumen vorgegeben und die Mahleinheit muss lediglich (prozesstechnisch wesentlich einfacher im Betrieb und in der Ansteuerung) solange betrieben werden, bis diese Charge vollständig vermahlen ist.

In zusätzlich vorteilhafter Weise wird weiterbildungsgemäß eine für einen gleichbleibenden Qualitätseindruck konstante Kaffeemehlmenge dadurch erreicht, dass ausgangsseitig der Mahleinheit Mittel zum Erfassen eines Mengenparameters der gemahlenen Bohnen (also des Kaffeemehls) vorgesehen sind. Typischerweise handelt es sich dabei um Mittel zum Erfassen eines Kaffeemehlvolumens (wobei jedoch alternativ, etwa über geeignete Wägemittel, auch das Erfassen eines Gewichts einer solchen beschränkten Kaffeemehlmenge möglich ist). Diese Erfassungsmittel erzeugen aus dem Erfassungsergebnis (also etwa aus einem erfassten Mehlvolumen) das erfindungsgemäße Erfassungssignal, welches über die erfindungsgemäßen Steuermittel so zu den erfindungsgemäßen Dosiermitteln (also der erfindungsgemäßen Dosiereinheit) geschleift (rückgekoppelt) ist, dass das mengenmäßige Ergebnis eines (vorhergehenden) Mahlvorgangs, verglichen mit einem Vergleichswert (als geeignetem, gewünschtem Sollwert für das benötigte Mehlvolumen), Grundlage für eine nachfolgend zu vermahlende Menge an Kaffeebohnen ("Bohnen-Eintragungsmenge" = "Bohnen-Dosiervolumen") ist. Dabei bildet sich im Optimalfall ein Regelsystem heraus, welches, über aufeinanderfolgende Chargen zu einer dem Sollwert entsprechenden konstanten Menge an Kaffeemehl ausgangsseitig der Mahleinheit führt, selbst wenn sich die Kaffeebohnensorte oder andere Bedingungen ändern.

Im Ergebnis erstattet die vorliegende Erfindung damit in überraschend einfacher und kontrollierter Weise das Bereitstellen und Verarbeiten sortenreiner Kaffeebohnen (als Grundlage für ein nachfolgendes Vermahlen) bzw. entsprechend sortenreines Kaffeemehls am Ausgang der Mahleinheit, wobei, zusätzlich vorteilhaft, die aus dem Stand der Technik beschriebenen Zwischen- bzw. Totvolumina effektiv vermieden werden können. Das Ergebnis ist eine deutlich erhöhte Prozess- und Geschmacksqualität des resultierenden gebrühten Kaffees. Insbesondere Geschmacksvariationen im Übergangsbereich zwischen zwei aufeinanderfolgend ausgewählten Bohnentypen können wirksam verhindert werden, und die vorliegende Erfindung ermöglicht zusätzlich durch die chargenweise, in sich geschlossene und portionsweise dimensionierte Bestimmung des Bohnen-Dosiervolumens eine verbesserte Automatisierbarkeit und Prozesssteuerung.

Dabei nimmt die vorliegende Erfindung bewusst den scheinbaren Nachteil in Kauf, dass vor dem Beginn des Vermahlens zunächst Bewegungs- und Fördervorgänge zur erfindungsgemäßen Portionierung erfolgen müssen, insoweit die mögliche Prozesszeit verlängern. Gleichzeitig ermöglicht die vorliegende Erfindung durch die größere Flexibilität und Kontrollierbarkeit des Prozesses an den verschiedenen beteiligten Einheiten eine Optimierung des Gesamtergebnisses.

Da zudem etwa das erfindungsgemäße Austragen aus einer (jeweiligen) Dosierkammer zur Mahleinheit in der Austragsposition Schwerkrafteffekte nutzt, also etwa ein Schütten bzw. Gleiten entlang einer schiefen Ebene oder dergleichen nutzt, weiterbildungsgemäß zusätzlich auch das Eintragen des Bohnen-Dosiervolumens in die (betreffende) Dosierkammer an der Eintragsposition entsprechende Schwerkraftwirkung nutzt, lässt sich so in äußert kompakter und damit nutzungsfreundlicher Weise eine schlanke Anordnung realisieren, welche (etwa motorisch) anzutreibende Teile minimiert, zusätzliche Residuen des Transportprozesses, etwa Stäube oder dergleichen der Kaffeebohnen, stets abwärts in Richtung auf die Mahleinheit und in diese hineinleitet, Verschmutzungen minimiert und entsprechend, praktisch bedeutsam, Reinigungs- und Wartungsaufwand verringert.

Praktisch besonders bedeutsam ist die vorliegende Erfindung im Zusammenhang mit der unmittelbaren Portionierung von Kaffee zu trinkfertigen Volumina, etwa zur unmittelbaren Bereitung einer Tasse oder einer Doppeltasse des gewünschten Kaffees, wobei erfindungsgemäß besonders günstig Bohnenmengen im Bereich zwischen 4g und 40g, insbesondere dann zwischen 7g und 20g, zur Bereitung derartiger Kaffeeportionen weiterbildungsgemäß günstig verarbeitet werden können.

Das der vorliegenden Erfindung zugrunde liegende Prinzip des Bewegens und Positionierens der Dosierkammer lässt sich konstruktiv auf verschiedene Weisen realisieren. So ist es bevorzugt und von der Erfindung umfasst, diese Positionierung der Dosierkammer entlang einer Bewegungslängsachse vorzusehen; entsprechend ist der erfindungsgemäß vorteilhafte variable Bewegungshub zum Einstellen einer Eintragsposition für ein jeweiliges Bohnen-Dosiervolumen ein linearer Bewegungshub. In der praktischen Realisierung kann dies etwa in Form einer (bevorzugt vertikal bewegten) Lift- bzw. Schlitteneinheit geschehen, welche bevorzugt als Doppel-Schlitteneinheit ein Paar von Dosierkammern (für ein zugehöriges Paar von Bohnenbehältern) in die variabel auszuwählende Eintragsposition bewegt und von dieser dann in die Austragsposition zum Entleeren des Bohnen-Dosiervolumens bewegen kann. Dabei ist vorteilhaft dann das Bohnen-Dosiervolumen bestimmt durch diejenige Kaffeebohnenmenge, welche, bevorzugt durch Schütten bzw. Gleiten entlang einer schiefen Ebene in der (jeweils gewählten) Eintragsposition in die Dosierkammer gelangt, wobei der Zufluss mit dem (positionsabhängigen) Erreichen des Füllzustandes stoppt; es gleiten etwa keine weiteren Bohnen nach. Mit der so realisierten Chargierung bewegt dann die Antriebseinheit die Dosierkammer zur Austragsposition, an welcher, etwa durch einen bogenseitigen Auslass in der Dosierkammer und fluchtend mit einer entsprechenden Öffnung zur Mahleinheit, das vollständige Volumen der Dosierkammer entleert werden kann. Vorteilhaft lässt sich eine derartige Schlitten- bzw. Liftbewegung in einer Longitudinalrichtung realisieren, weiter bevorzugt mittels einer (gemeinsamen) Antriebseinheit, etwa einer Motor-Stangenrealsierung für beide (oder weitere) Dosierkammern, von denen jeweils ja lediglich eine aktuell befüllt und dann entleert wird.

Alternativ ist es außerhalb der Erfindung möglich, die Bewegung der Dosierkammer rotatorisch vorzusehen, dergestalt, dass ein die Dosierkammer (bzw. eine Mehrzahl von Dosierkammern) ausbildender Körper weiterbildungsgemäß geeignet um eine Horizontal- oder Vertikal-Drehachse zwischen den Positionen bewegt wird, nämlich einerseits der Eintragsposition, wo eine geeignete Positionierung dann das gewünschte Bohnen-Dosiervolumen bestimmt, und der Austragsposition, an welcher, wiederum vorteilhaft durch ein gravitatives Austragen etwa entlang einer geneigten Fläche, das in der jeweils befüllten Dosierkammer enthaltene Volumen in Richtung auf die Mahleinheit austritt. Wiederum ist es vorgesehen, dass in der Eintragsposition die zu befüllende Dosierkammer so verschlossen ist, dass in dieser Position das Bohnen-Dosiervolumen nicht entweichen kann, während, nach dem Bewegen der Dosierkammer, in der Austragsposition ein entsprechendes Öffnen bzw. Freilegen einer geeigneten (rand- oder bodenseitigen) Austragsöffnung der Dosierkammer zur Mahleinheit erfolgt.

Vorteilhaft ermöglicht es die Erfindung, dass, wie beschrieben, Schüttvorgänge zwischen den einzelnen Funktionseinheiten stattfinden, mithin die Einheiten geometrisch oberhalb der Mahleinheit vorgesehen sind. Dies führt dann dazu, dass auch Stäube oder dergleichen zur Mahleinheit geführt werden und nicht unbeabsichtigt und verschmutzungsträchtig austreten.

Dabei kann, je nach gewählter konstruktiver Realisierung, das bodenseitige Verschließen der Dosierkammer durch eine (z.B. stationäre) Scheibe mit in einem vorbestimmten Drehwinkel vorgesehenem Durchbruch stattfinden (günstig etwa für eine Realisierung der Bewegung um eine vertikale Drehachse), im Alternativfall einer horizontalen Drehachse ist es bevorzugt, in Richtung auf die Achse jeweilige Dosierkammern durch geeignete Schieber- bzw. Verschlusseinheiten so zu verschließen, dass lediglich in der Austragsposition dann das Ausfließen zur Mahleinheit ermöglicht ist. Allen Varianten der Erfindung nachgeschaltet, erhält die Mahleinheit eine vorbestimmte und begrenzte Charge an Kaffeebohnen, vorteilhaft sortenrein, unvermengt und ohne Restvolumina anderer Bohnensorten. Entsprechend ist es weiterbildungsgemäß vorteilhaft vorgesehen, die Mahleinheit so anzusteuern, dass die zugeführte Bohnenmenge vollständig vermahlen wird, wobei insbesondere die gattungsgemäße Feinsteuerung (etwa bezogen auf eine genaue Mahldauer, eine Anzahl von Messer-Umdrehungen oder dergleichen) unnötig wird, mithin der Steuerungsaufwand deutlich vermindert ist. So ist es in der konstruktiv-praktischen Realisierung etwa bevorzugt, das vollständige Vermahlen der zugeführten Charge durch Beobachten des Motorstroms des Mahlwerk-Motors als Parameter vorzusehen; ein Abfallen des Motorstroms würde (nach dem Vermahlen der letzten Kaffeebohne) das vollständige Vermahlen und damit Entleeren des Mahlwerks signalisieren und etwa zum Deaktivieren des Mahlwerks führen können.

Weitere Vorteile, Merkmale und Einzelheiten, insbesondere betreffend die vorbeschriebenen prinzipiell-konstruktiven Varianten der Erfindung, ergeben sich aus der nachfolgenden Beschreibung bevorzugter Ausführungsbeispiele sowie anhand der Figuren.

Diese zeigen in:
- Fig. 1: eine schematische Ansicht der Fördermittel im Kaffeeautomaten gemäß einer ersten Ausführungsform der Erfindung;
- Fig. 2: eine Perspektivansicht zum Verdeutlichen der Dosierkammern der Fördermittel der Ausführungsform gemäß Fig. 1 relativ zum Gehäuse des Kaffeeautomaten in Perspektivansicht;
- Fig. 3, Fig. 4: Schemaansichten analog Fig. 1 zum Verdeutlichen der Eintragsposition (Fig. 3) bzw. des Entleerens zur Mahleinheit (Fig. 4);
- Fig. 5: ein Flussablaufdiagramm zum Verdeutlichen des Betriebs der vorliegenden Erfindung anhand der beschriebenen Ausführungsbeispiele;
- Fig. 6 - 9: Schemadarstellungen der Fördermittel bzw. deren beweg- und positionierbarer Dosierkammer in verschiedenen Betriebszuständen einer zweiten Ausführungsform der vorliegenden Erfindung;
- Fig. 10: eine perspektivische Schemaansicht zum Verdeutlichen der Bohnenbehälter sowie der Fördermittel des Kaffeeautomaten gemäß der zweiten Ausführungsform außerhalb der Erfindung;
- Fig. 11: eine Ansicht einer die Dosierkammern des zweiten Ausführungsbeispiels verschließenden bzw. freilegenden Lochscheibe;
- Fig. 12, Fig. 13: Perspektivansichten einer scheibenförmigen Dosiereinheit zur Realisierung eines Paares von Dosierkammern in der zweiten Ausführungsform;
- Fig. 14: vier verschiedene mögliche Dreh- bzw. Rotationszustände der Dosiereinheit gemäß Fig. 12, Fig. 13 relativ zur Lochscheibe (Fig. 11) zum Realisieren der erfindungsgemäßen Positionen;
- Fig. 15 - 18: eine Schemaansicht der die Dosierkammern realisierenden, um eine Horizontalachse drehbaren Dosiereinheit des Kaffeeautomaten gemäß einer dritten Ausführungsform außerhalb der Erfindung im Zusammenwirken mit einem Paar von Bohnenbehältern und
- Fig. 19: eine Detailansicht der Austragsmittel zum Entleeren der Dosierkammer im dritten Ausführungsbeispiel der Fig. 15 - 18.

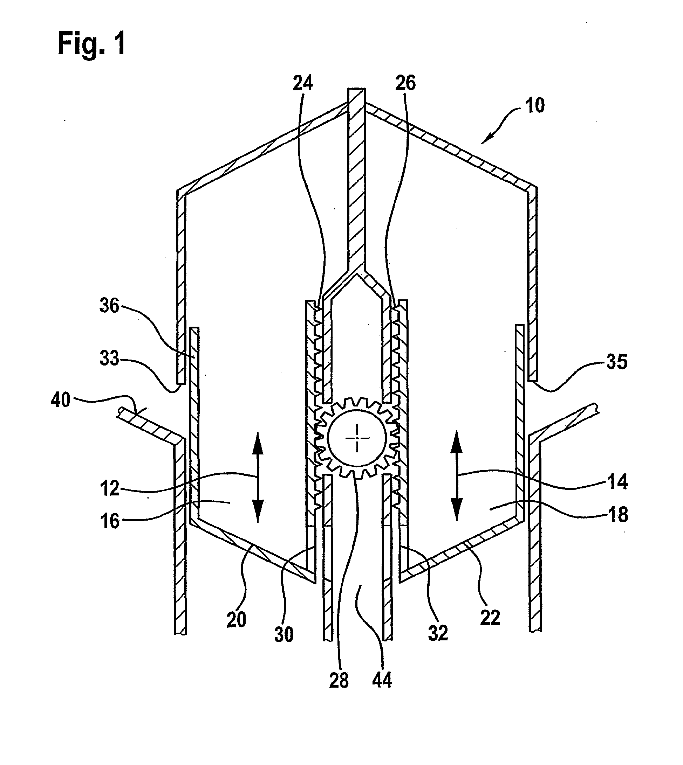

Anhand der Fig. 1 - 4 wird zunächst ein erstes Realisierungsprinzip des erfindungsgemäßen Kaffeeautomaten beschrieben. Dieses Prinzip als erste Ausführungsform basiert auf einer translatorischen Bewegung der als Dosiereinheit ausgebildeten Fördermittel, insbesondere ist, wie nachfolgend im Detail zu erläutern sein wird, die Dosiereinheit lift- bzw. schlittenartig ausgestaltet.

Konkret zeigt diesbezüglich die Fig. 1, wie innerhalb einer feststehenden Gehäuse-Schalenanordnung 10 ein Paar von liftartig vertikal entlang Pfeilrichtung 12, 14 bewegbaren Kammern 16 bzw. 18 das erfindungsgemäße Prinzip realisieren. Genauer gesagt, ist hier die Dosiereinheit realisiert als Paar von nach oben offenen und bodenseitig eine Schrägwand 20 bzw. 22 ausbildenden Kammern, welche, entlang der Pfeile 12, 14 und angetrieben durch ein mit einem Paar von Zahnstangen 24 bzw. 26 zusammenwirkenden zentralen (und selbst wiederum motorbetriebenen) Antriebsritzel 28, die Kammern an einer (in der Figurenebene) tiefen Position als Eintragsposition mit einer vorbestimmbaren Bohnenmenge beschickt werden können und dann, nach Aufwärtsbewegung in eine Austragsposition, eine jeweilige der Kammern, durch einen zugeordneten bodenseitigen Auslass 30 bzw. 32, zu einer nachgeschalteten, gemeinsamen Mahleinheit 34 austragen kann.

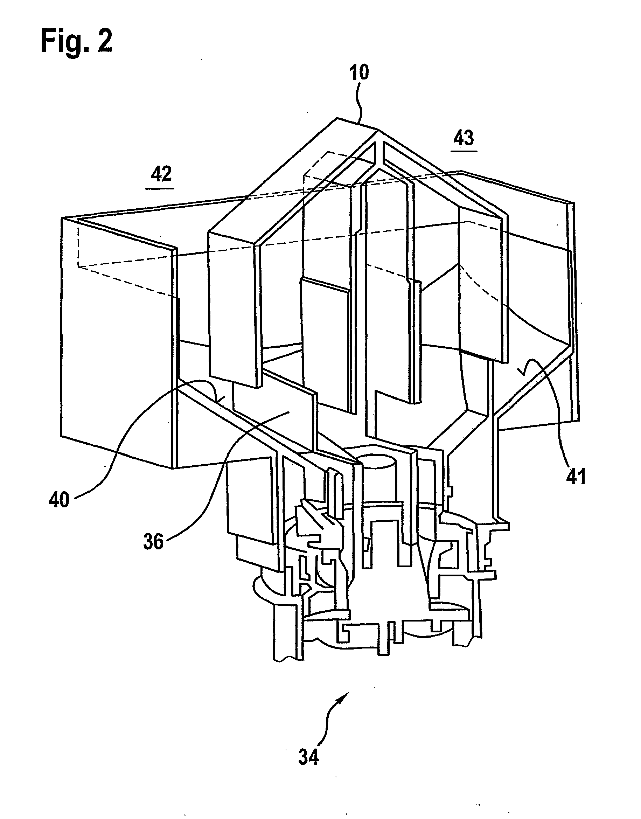

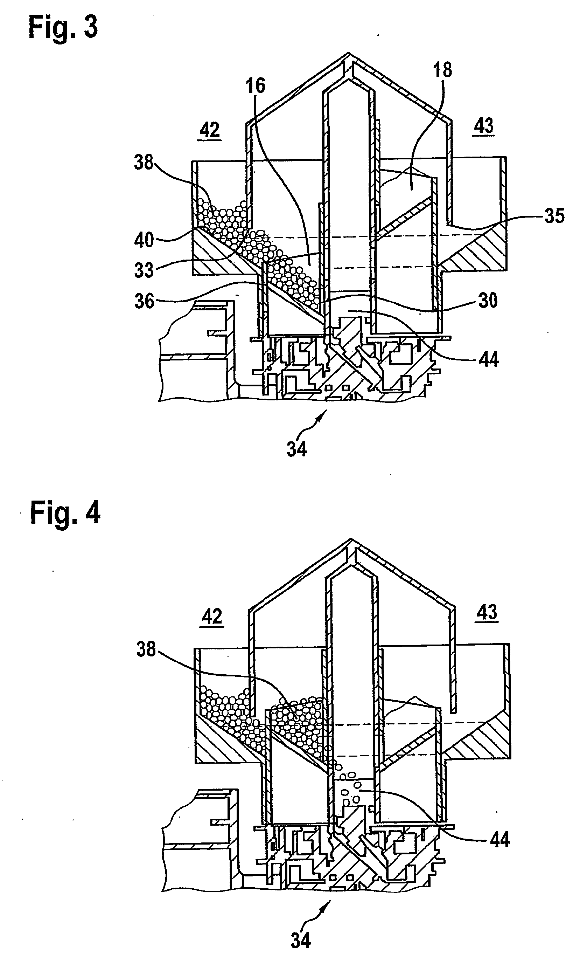

Die Fig. 3 bzw. 4 verdeutlichen die zugehörigen (Relativ-) Positionen des Kammerpaares 16, 18, in der Eintragsposition der linksseitigen ersten Kammer 16 (Fig. 3) bzw. in der Austragsposition (Fig. 4) dieser Kammer; da, wie nachfolgend weiter im Detail zu erläutern sein wird, durch geeignete vorgeschaltete Auswahl jeweils nur eine Kammer des Kammerpaares 16, 18 beschickt wird, ist insoweit dann eine Bewegung der unbeschickten Kammer (hier: Kammer 18) ohne Einfluss auf den Betrieb. So verdeutlicht die Fig. 3 den gegenüber der Schlitten- bzw. Liftposition der Fig. 1, 2 abgesenkten Zustand der linksseitigen Kammer 16 (durch Bewegung des Antriebsritzels 28 entgegen dem Uhrzeigersinn entsprechend befindet sich die rechtsseitige Kammer 18, hier nicht benötigt, in einem angehobenen Zustand).

Die abgesenkte Fahrposition der ersten Kammer 16 (in Pfeilrichtung 12 abwärts) legt, wie in Fig. 3 gezeigt, eine Einlassöffnung zwischen einer unteren Gehäusekante 33 (als oberer Spalt- bzw. Öffnungsbegrenzung) und äußerer Kammerwand 36 frei, mit dem Ergebnis, dass in der mit dem Bezugszeichen 38 beschriebenen Weise eine Schüttmenge von Kaffeebohnen durch die zwischen den Kanten 33, 36 bestimmte schlitzförmige Eintritts- bzw. Eintragsöffnung in das Kammerinnere gelangen kann. Dabei bestimmt die (vertikale) Weite, also der Abstand zwischen den Kanten 33 und 36, die Menge an Kaffeebohnen, welche entlang einer schrägen Schüttfläche 40, welche insoweit den Boden und den Auslass eines zugeordneten ersten, linksseitigen Bohnenbehälters 42 (vgl. insoweit Fig. 2) definiert, in die Kammer gelangen kann. Mithin ist es von einer vertikalen Verfahrposition der Kammern 16 bzw. 18 (jeweils relativ zur Gehäusekante 34 bzw. analog zu einer gegenüberliegenden Gehäusekante 35) abhängig, welche Menge an Kaffeebohnen in der in Fig. 3 verdeutlichten Weise in eine jeweilige Kammer, entlang eines Bohnenbehälterbodens 40 (bzw., analog, 41 für einen gegenüberliegenden zweiten Bohnenbehälter 43) gelangen kann. Entsprechend erfolgt zur Realisierung dieses Ausführungsbeispiels der Erfindung die erfindungsgemäße Positionierung der Kammer mit dem Zweck der Dosierung bzw. der Bestimmung des Bohnen-Dosiervolumens für die jeweilige Kammer durch diese Relativposition.

In den Figuren nicht näher gezeigter Weise, gleichwohl für den Fachmann eindeutig, stellt dabei der gezeigte Antrieb für das Paar von Kammern 14, 16 mittels des Paares von Zahnstangen 24, 26 und der zugeordneten Antriebseinheit 28 einen eleganten Weg dar, diese Erfindung zu realisieren, da, wie dem Fachmann ohne weitere detaillierte Illustration unmittelbar klar ist, die für eine Dosierung nötige Feinpositionierung durch entsprechende Ansteuerung bzw. Bewegung des Ritzels 28 erfolgen kann und beispielsweise über einen geeigneten Schrittmotor oder dergleichen vorgeschalteten Antrieb in präziser, zuverlässiger und leicht ansteuerbarer Weise realisierbar ist.

Sobald in der Eintragsposition der Fig. 3 das durch die Öffnungsweite 34 - 36 bestimmte Bohnen-Dosiervolumen in die erste Kammer 16 eingetragen ist, hebt der Kammerantrieb diese Kammer an (durch Betreiben des Antriebsritzels 28 in Richtung des Uhrzeigersinns im Beispiel der Fig. 1, wobei gleichermaßen die unbefüllte zweite Kammer 18 abgesenkt wird), mit dem Ergebnis, dass zunächst, wie in Fig. 4 gezeigt, das vorbestimmte, in die Kammer 16 eingetragene Bohnen-Dosiervolumen in Pfeilrichtung 12 aufwärts gehoben wird, bis der Kammerauslass 30, bezogen auf einen mittigen, zur Mahleinheit 34 führenden und beiden Kammern 16, 18 gemeinsam zugeordneten Austragskanal 44, freigelegt ist und die Bohnencharge dann durch den Auslass 30 und den Kanal 44 zur Mahleinheit 34 (in Form einer Schüttung entlang der abwärts zur Öffnung 30 geneigten Bohnenfläche 20 der Kammer 16) ausgetragen werden kann.

Die Mahleinheit 34 erhält nunmehr die dem wie vorbeschrieben dosierten Bohnen-Dosiervolumen entsprechende Charge, vermahlt diese (über einen vorbestimmten Zeitraum bzw., etwa durch Überwachung eines Mahlwerks-Motorstroms) bis zum vollständigen Hindurchtritt der Kaffeebohnen durch die Mahleinheit, woraufhin dann das sortenreine (da ja, in der erfindungsgemäßen Weise ausschließlich aus dem Bohnenbehälter 42 ausgetragene und in sich geschlossene) Bohnen-Dosiervolumen zu keinem Zeitpunkt mit Bohnen des gegenüberliegenden Behälters 34 vermengt werden konnte.

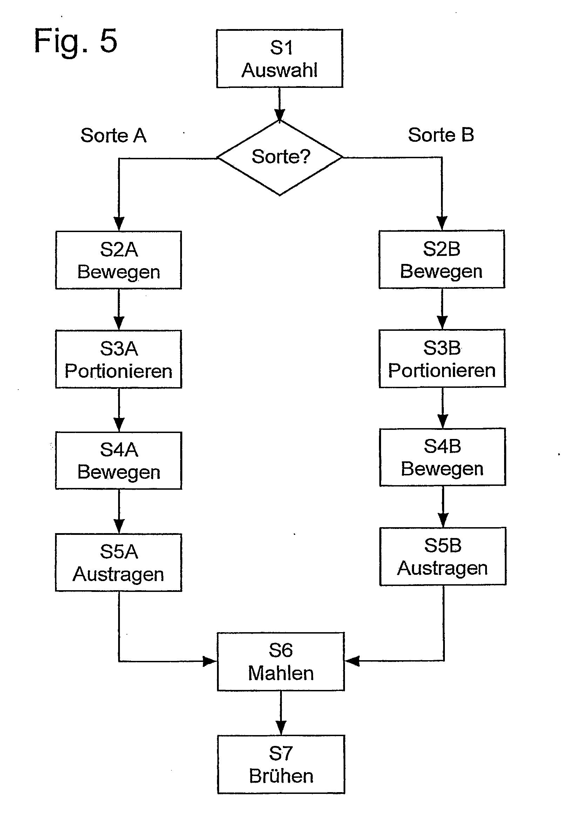

In abstrahierter Form beschreibt die Fig. 5 anhand eines Verfahrens-Flussschaubildes den Betriebsvorgang beim Betreiben des anhand der Fig. 1 - 4 schematisch illustrierten ersten Ausführungsbeispiels, wobei die generische Darstellung der Fig. 5 gleichermaßen auch für die nachfolgend zu beschreibenden weiteren Ausführungsbeispiele gilt: In einem Schritt S1 wählt eine Bedienperson aus, welche Bohnensorte einem nachfolgenden Dosier-, Mahl- und Brühvorgang für ein Zubereiten des Kaffeegetränks zugrundegelegt werden soll. In ansonsten bekannter Weise erfolgt dies beispielsweise in Form einer geeigneten Schalter- oder Tasterbetätigung einer (nicht näher gezeigten und als bekannt vorausgesetzten) Benutzerschnittstelle einer Bedieneinheit. Entsprechend dieser Sortenauswahl (wobei das Flussdiagramm der Fig. 5 exemplarisch von zwei alternativen Kaffeesorten, der Sorte A und der Sorte B, entsprechend einem Paar von zugeordneten Kaffeebehältern ausgeht), erfolgt dann in weiteren Schritten der Bewegungs-, Portionier- und Austragsbetrieb für eine Charge ("Bohnen-Dosiervolumen") der jeweils ausgewählten Kaffeesorten bis zum Mahlen der durch die gemeinsam zugeordnete Mahleinheit bzw. dem Brühen des hier gemahlenen Kaffeepulvers in einer (gemeinsamen) Brüheinheit, welche wiederum als bekannt vorausgesetzt und in den Figuren nicht näher illustriert ist.

Entsprechend dem Schaubild der Fig. 5 in Konkordanz zum ersten Ausführungsbeispiel der Fig. 1 - 4 entspricht dabei der Schritt S2A "Bewegen" der Abwärtsbewegung entlang Pfeil 12 der ersten, nach oben offenen Kammer 16 zur Eintragsposition, entsprechend soweit dem in Fig. 3 gezeigten Zustand. Gemäß Schritt S3A "Portionieren" und entsprechend der Kaffeebohnenschüttung 38 aus dem ersten Bohnenbehälter 42 erfolgt entlang des schrägen Behälterbodens 40 das Eintragen des durch die Kammerposition vorbestimmten Bohnen-Dosiervolumens in die Kammer.

Im nachfolgenden Verfahrensschritt S4A "Bewegen", entlang Pfeilrichtung 12 aufwärts, verfährt die erste Kammer 16 bis zur Austragsposition der Fig. 4, an welcher dann, entlang des schrägen Kammerbodens 20 und durch die bodenseitige Kammeröffnung 30 bzw. den Austragskanal 42, das Bohnen-Dosiervolumen zur nachgeschalteten Mahleinheit 34 ausgetragen wird. Vorteilhaft gelangt dabei nicht nur die vorbestimmte (und sortenreine) Kaffeebohnenmenge zur Mahleinheit, sondern auch etwaige Stäube oder dergleichen Substanzen, welche entsprechend diesem Füllgutfluss abwärts zur Mahleinheit 34 ausgetragen werden und, praktisch nützlich, keine Verschmutzung oder dergleichen reinigungsträchtige Beeinträchtigung bewirken.

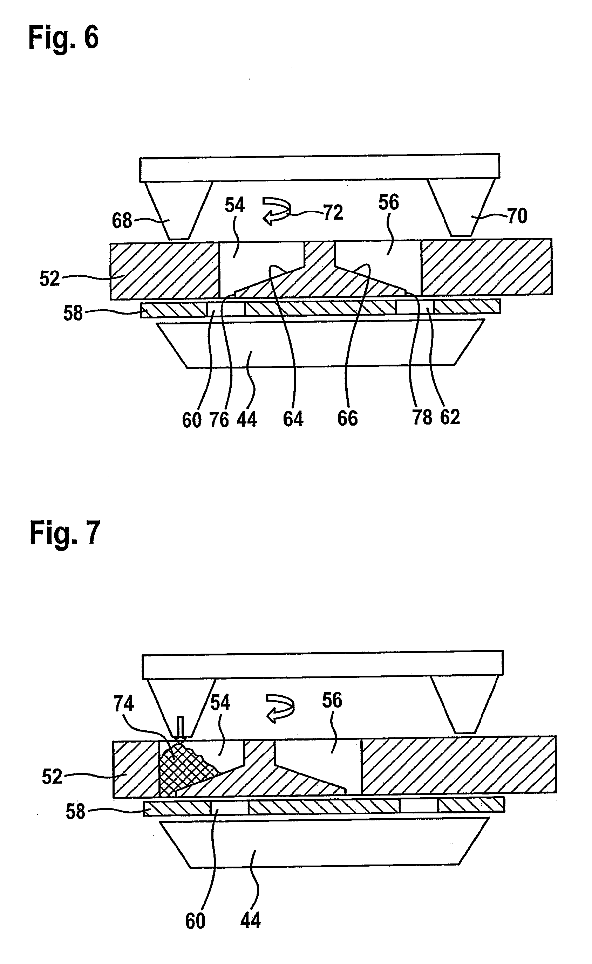

Anhand der Fig. 6 - 13 wird nachfolgend ein zweites Realisierungsprinzip beschrieben. Dabei werden, ausgehend vom ersten Ausführungsbeispiel der Fig. 1 - 4, für gleiche bzw. äquivalente Funktions- und Baugruppen gleiche Bezugszeichen verwendet.

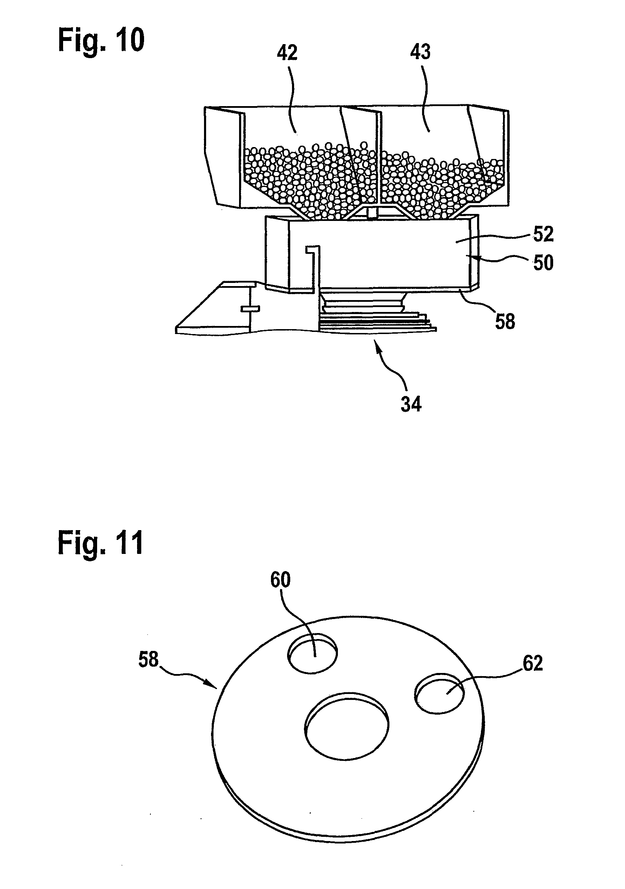

So zeigt die perspektivische Schnittansicht der Fig. 10 den schematischen Aufbau des Kaffeeautomaten gemäß dem zweiten Ausführungsbeispiel, im Zusammenwirken zwischen dem Paar von Bohnenbehältern 42, 43 mit als Dosiereinheit 50 ausgebildeten Fördermitteln, welchen wiederum die Mahleinheit 34, abwärts gerichtet, nachgeschaltet ist.

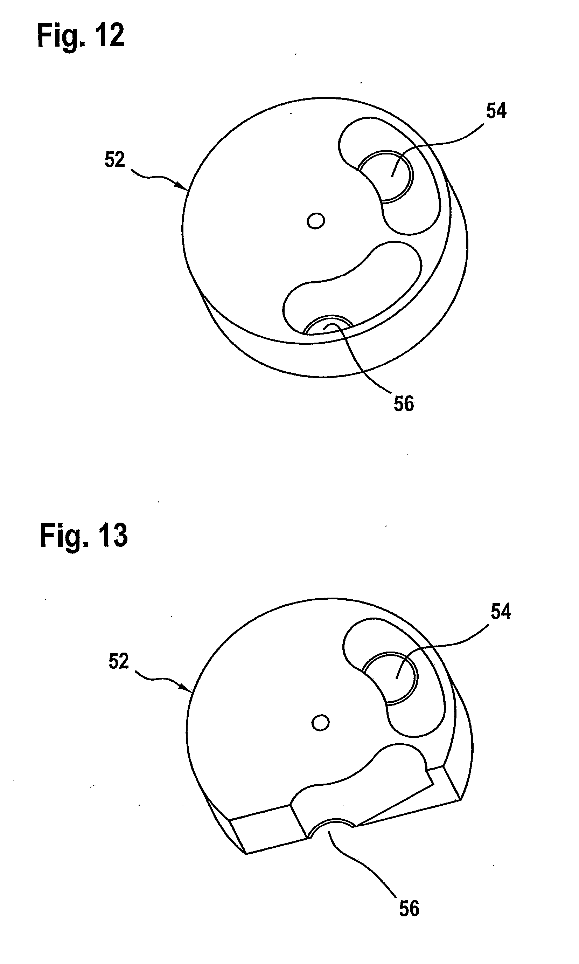

Das zweite Ausführungsbeispiel basiert, im Gegensatz zur translatorischen Bewegung eines Paares von Kammern (16, 18 in Fig. 1 - 4), auf einer rotatorischen Bewegung eines scheibenförmigen Körpers 52 um eine vertikale Drehachse, wobei in dem Dosierkörper 42 wiederum Dosierkammem 54 bzw. 56, wie in den Fig. 12 und 13 des getrennt dargestellten Körpers 52 gezeigte, eingeformt sind. Der scheibenförmige Dosierkörper 52 wirkt koaxial zusammen mit einer Lochscheibe 58 (Fig. 11), wobei diese Lochscheibe, zum bodenseitigen Zusammenwirken mit und Öffnen der Dosierkammern 54, 56, geeignet in einer vorbestimmten Drehposition fluchtende Auslasslöcher 60, 62 ausbildet.

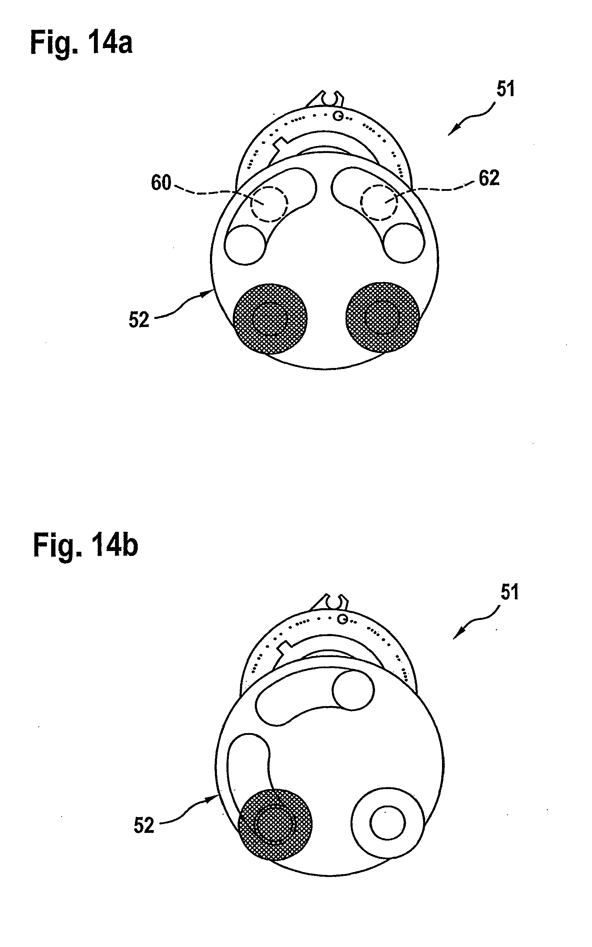

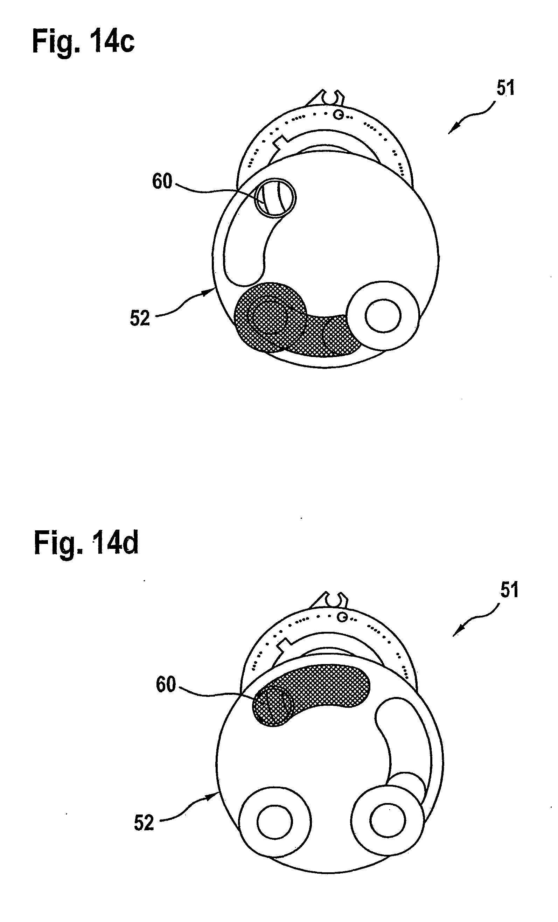

Die Abfolge der Fig. 6 - 9 verdeutlicht das Prinzip des Positionierens, Eintragens, Bewegens zur Austragsposition und Austragens in diesem zweiten Ausführungsbeispiel; parallel wird Bezug genommen auf die Abfolge der Relativpositionen (a) bis (d) zwischen Lochscheibe 11 und Dosierkörper 52 in Fig. 14 (wobei hier zusätzlich ein Drehantrieb 51 mit Positionscodierung skizziert ist): Die Fig. 6 beschreibt zunächst eine Ausgangsstellung als relative Drehposition zwischen der (stationären) Lochscheibe 58 (Fig. 11 bzw. Fig. 10 unten) und dem um eine Vertikalachse (in Fig. 10) drehbaren Dosierkörper 52: Zwar ist die erste Dosierkammer 54, welche eine eine Schüttung zum Austragen ermöglichende schräge Bodenfläche 64 aufweist, bodenseitig zum Durchbruch 60 der Scheibe 11 und damit zum gemeinsamen Auslass 44 für das nachgeschaltete Mahlwerk geöffnet (und gleichermaßen gilt dies für die zweite Dosierkammer 56 mit einem entsprechend schräg verlaufenden Kammerboden 66 zum zweiten, zugeordneten Durchbruch 62), jedoch ist sowohl ein erster Behälterauslass 68, zugeordnet dem ersten Bohnenbehälter 42, als auch ein zweiter Behälterauslass 70, zugeordnet dem zweiten Bohnenbehälter 43, durch den Drehkörper 52 in der gezeigten Relativposition verschlossen. Die Position der Fig. 6 entspricht insoweit Zustand (a) in Fig. 14.

Wird nunmehr der Dosierkörper 52 entlang Pfeilrichtung 72 (um ihre zugeordnete vertikale Drehachse) um einen vorbestimmten Winkel verdreht (Fig. 14 (b), 60° entgegen dem Uhrzeigersinn), so füllt sich, wie in der schematischen vertikalen Schnittansicht der Fig. 7 gezeigt, die erste Kammer 54 mit dem gezeigten Bohnen-Dosiervolumen 74. Bodenseitig ist die Kammer 54 zur Lochscheibe 60 verschlossen. Da der vorbestimmte Winkel (hier 60°) für das Bohnen-Schüttvolumen A des ersten Bohnenbehälters 42, eingetragen durch den Auslass 68, lediglich begrenzt freiliegt, erfolgt keine vollständige Befüllung des maximal möglichen Kammervolumens 54, so dass die Darstellung der Fig. 7 (bzw. 14 (b)) insoweit einem reduzierten bzw. minimierten Bohnen-Dosiervolumen entspricht.

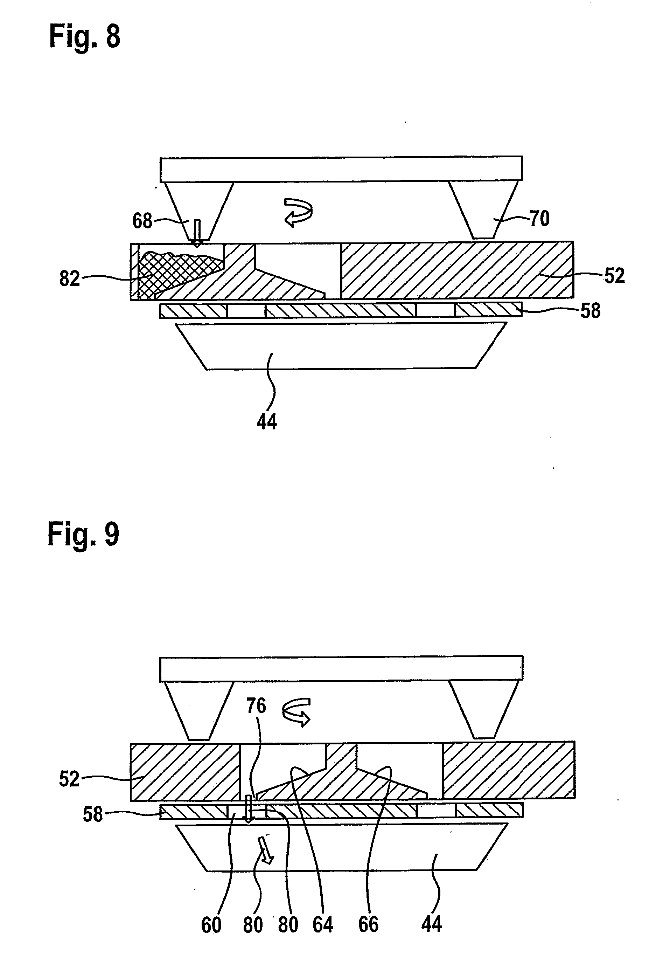

Da der Eintrag in die Kammer 54 gravitativ, also durch Schwerkraftwirkung aus dem Bohnenbehälter 42, wiederum entlang einer geneigten BehälterBodenfläche und durch den Auslass 68 in die Kammer 54, erfolgte, rutschen mit Erreichen des in Fig. 7 bezeigten Füllzustands weitere Bohnen nicht nach, so dass insoweit das Eintragen (bzw. Dosieren in dieses Bohnen-Dosiervolumen, bestimmt durch den Drehwinkel) beendet ist. Ein weiteres Verdrehen des Dosierkörpers 52 bis zur Austragsposition der Fig. 9 (bzw. Fig. 14 (d)) führt dann dazu, dass eine bodenseitige Öffnung 76 (gleichermaßen ausgebildet als bodenseitige Öffnung 78 in der zweiten Dosierkammer 56) mit dem zugehörigen Scheibendurchbruch 60 fluchtet und, entsprechend Pfeilrichtung 80, die in der Kammer 54 enthaltene Charge zum gemeinsamen Auslass 44 bzw. zur nachgeschalteten Mahleinheit (in den Fig. 6 - 9 nicht gezeigt) ausgetragen werden kann. Entsprechend der schrägen Bodenwand 64 (analog für die zweite Kammer 56, dort die Bodenwand 78) erfolgt auch das Austragen gravitativ, also durch einen Schüttvorgang durch den mittels der fluchtenden Öffnungen 76 und 60 gebildeten Auslass zum Austragskanal 44.

Als alternative Drehposition zur Darstellung der Fig. 7 (bzw. der Fig. 14(b)) ist mit der Längsschnitt-Schemaansicht der Fig. 8 verdeutlicht, wie ein anderer Drehwinkel, also eine andere relative Drehposition der Kammer 54 relativ zum ersten Bohnenbehälter bzw. dem zugehörigen Bohnenauslass 68, eine eingetragene Kaffeebohnen-Dosiermenge ("Bohnen-Dosiervolumen") gesteuert verändert: Bewegt um einen kleineren Drehwinkel, im Beispiel der Fig. 8/Fig. 14 (c), um 55°, ermöglicht die Relativposition zwischen Auslass 68 und Kammer 54, bedingt durch deren asymmetrische Kammerform, das Eintragen eines gegenüber dem kleineren Volumen 74 erhöhten Volumens 82. Genauer gesagt kann in dieser Relativposition zwischen Auslass 68 und Kammer 54 die entsprechend erhöhte Kaffeebohnenmenge in die Kammer eintreten und so die vorbestimmte Charge definieren. Damit ist, entsprechend dem allgemeinen Positionier-Erfindungsgedanken, die zu dosierende Menge ("Bohnen-Dosiervolumen") durch Vorbestimmen des Drehwinkels des Dosierkörpers 52 einstellbar, im Ausführungsbeispiel etwa zwischen den Chargen 74 und 82 auswählbar, wobei in der praktischen Realisierung dies durch geeignete Ansteuerung des (wiederum für beide Kammern 54, 56 gemeinsamen) Drehantriebs für den Drehkörper 52, etwa in Form eines geeignet anzusteuernden Schrittmotors, geschehen kann. Wiederum wird das gemäß Fig. 8 (bzw. gemäß Fig. 14 (c)) eingetragene größere Volumen in der weiteren Drehposition der Fig. 9 entlang Pfeilrichtung 80 ausgetragen und gelangt ggf. in Verbindung mit weiteren Stäuben und sonstigen (Verunreinigungs-)Stoffen zur unterliegenden Mahleinheit 34 zum nachfolgenden Vermahlen und Brühen.

Wie die Anordnung der Kammern 54, 56 bzw. der zugehörigen Durchbrüche 60 bzw. 62 der Lochscheibe 58 verdeutlicht, lässt sich, analog zur Darstellung der Fig. 6 - 9 und 14 für die erste Dosierkammer 54, das Positionieren, Eintragen und Austragen für die zweite Dosierkammer 56 durch eine Rotationsbewegung in umgekehrter Pfeilrichtung der Drehbewegung 72 realisieren. Insoweit würde dann die für den gemeinsamen Dosierkörper 52 vorgesehene Antriebseinheit diesen Körper in entgegengesetzter Drehrichtung in vorbestimmte Relativpositionen zwischen Drehkörper 52 und stationärer Lochscheibe 58 positionieren und dann einen zu den Figuren äquivalenten Befüllungs- und Austragsbetrieb realisieren.

Auch wurde hier, entsprechend einem ausgewählten Bohnenbehälter 42, 43 und einer zugehörigen Sorte A bzw. B, entsprechend dem in Fig. 5 beschriebenen Verfahrensablauf vorgegangen. Im Gegensatz zum ersten Ausführungsbeispiel der Fig. 1 - 4 sind dabei jedoch die Bewegungsschritte (S2 bzw. S4) Rotationsbewegungen des Körpers 52 um eine Vertikalachse anstatt translatorische Bewegungen.

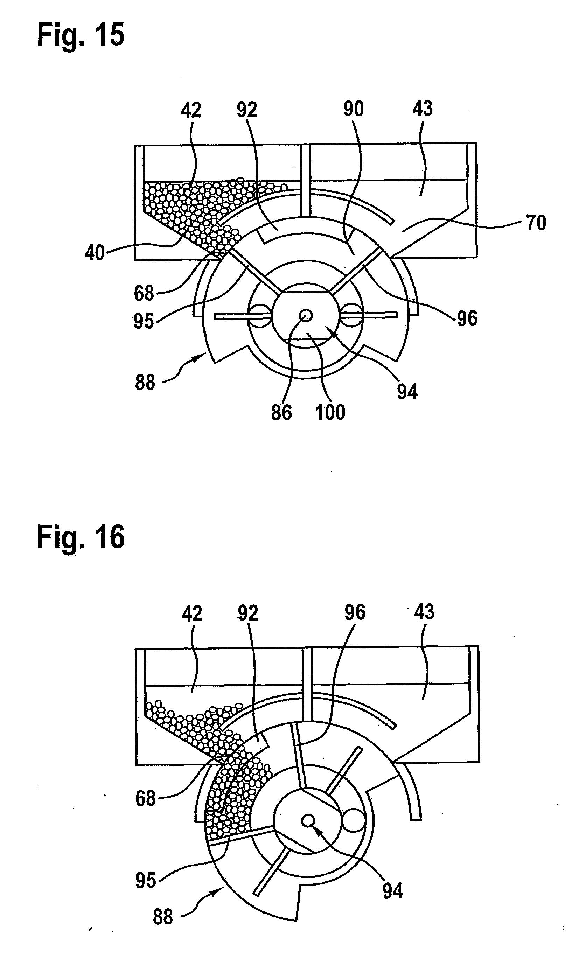

Anhand der Fig. 15 - 19 wird nunmehr ein drittes Realisierungsprinzip als drittes Ausführungsbeispiel des Kaffeeautomaten beschrieben. Auch hier wird eine Dosiereinheit (als Dosierkörper) in eine Rotationsbewegung versetzt und entsprechend einem Drehwinkel in die Eintrags- und Austragsposition bewegt, im Gegensatz zum zweiten Ausführungsbeispiel erfolgt hier jedoch die Drehbewegung um eine horizontal verlaufende Drehachse, und der Dosierkörper weist eine beiden Bohnenbehältern gemeinsame Dosierkammer auf.

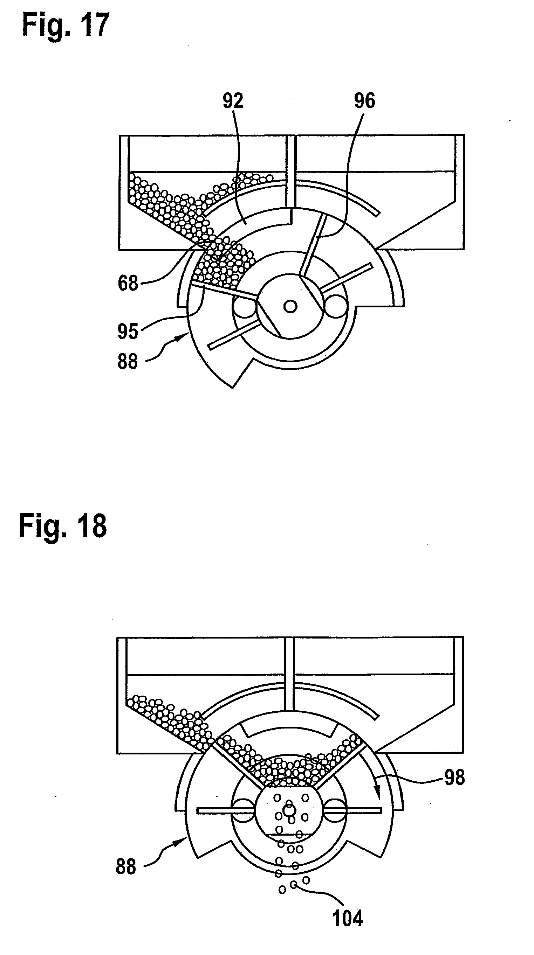

Konkret verdeutlichen die vertikalen Schnittansichten der Fig. 15 - 18 das Zusammenwirken eines um eine horizontale Drehachse 86 (im Ausfüh rungsbeispiel senkrecht zur Zeichnungsebene) drehbaren Dosierkörpers 88 mit einem Paar von Bohnenbehältern 42, 43, welche wiederum über eine schräg verlaufende Bodenfläche 40 und bodenseitige Auslässe 68, 70 zu einer Dosierkammer 90 geöffnet werden können. Konkret ist, wie in der Fig. 15 durch den Öffnungsbereich (Bogenabschnitt) 92 verdeutlicht, die Kammer bestimmt als Bereich zwischen einem Paar von sich von einem Mittenabschnitt 94 nach auswärts erstreckenden Wandabschnitten 95, 96, welche zwischen sich die Kammer mit ihrem maximalen Kammervolumen definieren. Der scheibenförmige und/oder flachzylindrische Dosierkörper 88 öffnet dann mantelseitig entlang des Bogens 92 diese Kammer 90, so dass, wie anhand der Darstellungen der Fig. 16 und 17 gezeigt, eine Relativ-Verdrehung zwischen dem Auslass 68 und der Öffnung 92 ein Eintragsvolumen ("Bohnen-Dosiervolumen") für in einer jeweiligen Relativ-Drehposition aus der Kammer 42 in die Dosierkammer 90 eintretende Kaffeebohnen bestimmt: So zeigt die Fig. 16, ansonsten identisch zur Darstellung der Fig. 15, einen um 55° entgegen der Richtung des Uhrzeigersinns verschwenkten Zustand des Dosierkörpers 88. In diesem Drehzustand fluchtet der Auslass 68 des (ersten) Bohnenbehälters 42 mit der Öffnung 92 der Dosierkammer 90, wobei in dieser Dosierposition der Auslass 68 im oberen Bereich der Kammer (begrenzt durch die Wand 96) liegt. Entsprechend beschreibt der Zustand der Fig. 16 ein maximales Füllvolumen, da in dieser Position die Kammer 90 weitgehend durch Kaffeebohnen auf- bzw. ausgefüllt werden kann.

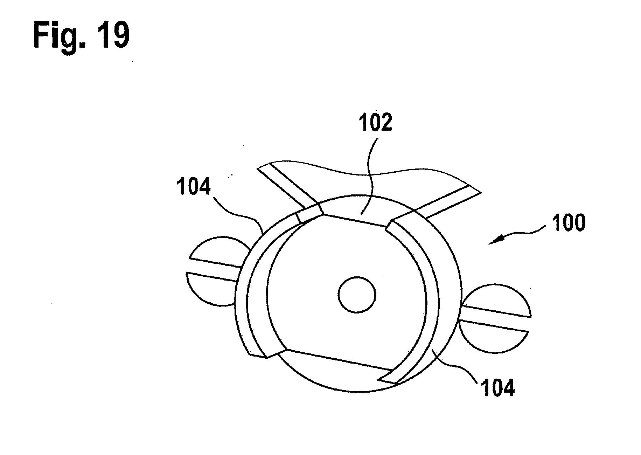

Eine nachfolgende Drehbewegung in Richtung des Uhrzeigersinns, Pfeilrichtung 98, verbringt den Dosierkörper 88 zurück in die Ausgangsstellung der Fig. 15. An dieser ist, relativ zu einem mittleren (und bezogen auf die Dosierkammer 90 bodenseitigen) stationären Sperrstück 100 (Fig. 19 mit der Detailansicht) zwischen den eine schräge Schütt-Austragsfläche bildenden Wandabschnitten 95, 96 ein Auslass 102 freigelegt, durch welchen dann die in der Kammer 90 enthaltene Charge austreten kann (symbolisiert durch den Materialfluss 104 in Fig. 18). Wie zudem die Fig. 16 in Verbindung mit der Detailansicht der Fig. 19 verdeutlicht, verschließen Wandabschnitte 104 des stationären Verschlussstücks in der Eintragsposition der Fig. 16 (und i. Ü. auch in der weiteren Eintragsposition der Fig. 17) den bodenseitigen Auslass 102 der Dosierkammer 90, so dass in diesen Positionen keine Kaffeebohnen austreten können. Der Austrag 104 gelangt dann wiederum zu der unterhalb geeignet vorgesehenen (nicht gezeigten) Mahleinheit 34, um dort, entsprechend der durch das Eintragsvolumen in die Kammer 90 bestimmten Bohnenmenge, sortenrein vermahlen zu werden.

Relativ zum Drehzustand der Fig. 16 verdeutlicht die Fig. 17 eine alternative Dosierung einer (gegenüber dem Füllstand der Fig. 16 geringeren) Füllmenge bzw. Chargierung: Wie die Fig. 17 verdeutlicht, ist der Dosierkörper 88, aus dem Ausgangszustand der Fig. 15, um einen (gegenüber Fig. 16) kleineren Drehwinkel, hier 25°, entgegen der Richtung des Uhrzeigersinns verdreht. Wiederum ist in dieser Position ein Bereich der Öffnungsweite 92 zum Auslass 68 freigelegt. Da jedoch der (relativ zu Fig. 16) kleinere Verdrehwinkel den unteren Kammer-Wandabschnitt 95 der Einfüllkammer 90 relativ näher zum Behälterauslass 68 platziert, ist, relativ zur Fig. 16, das Kaffee-Einfüllvolumen ("Bohnen-Dosiervolumen") der Fig. 17 gegenüber der Fig. 16 reduziert, so dass bei einem nachfolgenden Zurückführen in den Austragszustand (Fig. 18) eine relativ geringere Bohnencharge bodenseitig durch den Kammerauslass 102 ausgetragen und zur nachgeschalteten Mahleinheit gebracht wird.

Damit ist zur Realisierung des erfindungsgemäßen Positionierungs- und Dosierungsprinzips im dritten Ausführungsbeispiel der Fig. 15 - 19 ein Einstellen bzw. Vorbestimmen des Bohnen-Dosiervolumens durch den Dreh- bzw. Positionswinkel des Dosierkörpers 88 relativ zur Öffnung 68 möglich, wobei, ohne dies näher im Detail zu beschreiben, symmetrisch und analog, mit entsprechend entgegengesetzten Drehwinkeln, gleichermaßen eine variable Dosierung aus dem zweiten Bohnenbehälter 68, über den zugeordneten Auslass 70, dann in die gemeinsame Dosierkammer 90 erfolgen würde. Wiederum geeignet durch Ansteuerung eines z.B. als Schrittmotor ausgestalteten Antriebsmotors oder dergleichen Einheit lässt sich dieser die Dosierung bestimmende Positionswinkel geeignet einstellen, vorbestimmen bzw. regeln. Eine je nach Dimensionierung der Drehwinkel möglicherweise notwendige Nachführung des Verschlusskörpers 100 [bitte überprüfen] lässt sich entweder durch separate Ansteuerung, bevorzugt jedoch durch synchronisierte Bewegung, dann mit der Dosierkörperbewegung 88 einrichten.

Auch diese dritte Realisierungsform setzt damit das in Fig. 5 beschriebene Verfahren um, wobei wiederum die Bewegungsschritte S2 bzw. S4 die beschriebenen relativen Drehpositionierungen bedeuten (ggf. in Verbindung mit einem zugehörigen Einstellen des zentrischen Sperrelements 100); wie auch im Fall des zweiten Ausführungsbeispiels würden entgegengesetzte Drehwinkel und zugehörige Drehbewegungen einem jeweils ausgewählten der Bohnenbehälter entsprechen.

Im Ergebnis ermöglicht es somit die Erfindung, beschrieben anhand von prinzipiellen, jedoch nicht abschließenden Realisierungsformen, wie in einfacher und eleganter Weise das Problem unerwünschter Vermischung durch Rest- bzw. Totvolumina im Fördertrakt zur Mahleinheit gelöst werden kann; in sämtlichen Fällen erfolgt, sortenrein, eine Portionierung in einer Eintragsposition und ein einfaches, sauberes und mechanisch leicht umsetzbares Austragen dieser Charge zur nachgeschalteten Mahleinheit, welche, steuerungstechnisch vereinfacht, lediglich die gesamte Charge vermahlen muss und ansonsten keinerlei besonderer Zeit- oder Volumensteuerung bedarf.

Dabei ist die vorliegende Erfindung nicht auf die beschriebenen Realisierungsbeispiele beschränkt; nicht nur ist es von der Erfindung umfasst, mehr als zwei Bohnenbehälter (und mithin mehr als zwei Bohnensorten) zur Auswahl und nachfolgenden Dosierung vorzusehen, auch sind die beschriebenen Bewegungs- und Antriebsbeispiele lediglich exemplarisch und können durch zahlreiche weitere denkbare Eintrags-, Bewegungs- und Austragsprinzipien realisiert werden.

## Patentansprüche

1. Kaffeeautomat mit
einem ersten Bohnenbehälter (42) und einem zweiten (43), vom ersten Bohnenbehälter getrennt vorgesehenen Bohnenbehälter,
einer zum Mahlen von Bohnen aus dem ersten und dem zweiten Bohnenbehälter ausgebildeten Mahleinheit (34),
, einer der Mahleinheit nachgeschalteten Brüheinheit für gemahlene Bohnen und
Fördermitteln zum selektiven Eintragen von Bohnen aus dem ersten und dem zweiten Bohnenbehälter in die Mahleinheit,
**dadurch gekennzeichnet, dass**
die als Dosiereinheit (16, 18) ausgebildeten Fördermittel eine mittels einer linear wirkenden Antriebseinheit (24, 26, 28) vertikal beweg- und positionierbare Dosierkammer konstanten Kammervolumens aufweisen, deren Bohnen-Dosiervolumen durch einen eine Eintragsposition bestimmenden variablen und linearen Bewegungshub der Dosierkammerbewegung einstell- und/oder bestimmbar ist,
die Dosiereinheit Austragungsmittel (30, 32) zum Entleeren der Dosierkammer zur Mahleinheit aufweist, die in einer von der Eintragsposition verschiedenen Austragsposition der Dosierkammer ein gravitatives Austragen, insbesondere entlang einer geneigten Fläche, bewirken, und
die linear wirkende Antriebseinheit zum Bewegen und Positionieren der Dosierkammer entlang einer Bewegungslängsachse ausgebildet ist.

2. Kaffeeautomat nach Anspruch 1, **dadurch gekennzeichnet, dass** das Bohnen-Dosiervolumen einer einfachen oder doppelten Portionierungsgröße des mit dem Kaffeeautomaten vorbestimmbaren Heißgetränks, insbesondere einer Bohnenmenge im Bereich zwischen 4g und 40 g, weiter bevorzugt zwischen 7g und 20g entspricht.

3. Kaffeeautomat nach einem der Ansprüche 1 oder 2, **dadurch gekennzeichnet, dass** die Dosierkammer
zumindest in der Austragsposition eine geneigte Schüttfläche (20, 22; 64, 66; 95, 96) ausbildet,
und/oder dass die Dosierkammer in der Eintrags- und in der Austragsposition oberhalb der Mahleinheit vorgesehen ist und/oder dass die Dosierkammer entsprechend für die Anzahl der Bohnenbehälter mehrfach und für jeden der Bohnenbehälter separat vorgesehen und diesem zugeordnet ist.

4. Kaffeeautomat nach einem der Ansprüche 1 bis 3, **dadurch gekennzeichnet, dass** die Antriebseinheit einer Mehrzahl der Dosierkammern gemeinsam zugeordnet ist, insbesondere nur ein Antriebsaggregat zum Bewegen bzw. Positionieren der Dosierkammem aufweist.

5. Kaffeeautomat nach einem der Ansprüche 1 bis 4, **dadurch gekennzeichnet, dass** die Dosierkammer in einer linear beweglichen Lift- und/oder Schlitteneinheit vorgesehen ist und die das Bohnen-Dosiervolumen in der Eintragsposition von einer Lift- bzw. Schlittenposition relativ zu einem Behälterauslass des ersten und/oder zweiten Bohnenbehälters bestimmt ist.

6. Kaffeeautomat nach Anspruch 5, **dadurch gekennzeichnet, dass** die Lift- bzw. Schlitteneinheit so mit der Mahleinheit zusammenwirkt, dass in der Austragsposition ein rand- und/oder bodenseitiger Durchbruch (30, 32) der Dosierkammer zur Mahleinheit geöffnet ist.

7. Kaffeeautomat nach einem der Ansprüche 1 bis 6, **dadurch gekennzeichnet, dass** der variable Bewegungshub in der Eintragsposition eine Mehrzahl von manuell oder elektronisch auswählbaren Dosierkammerpositionen einschließt, die insbesondere von einer Kaffeesorte und/oder Kaffee-Portionsmenge abhängig sind und/oder für Füllgut des ersten und des zweiten Bohnenbehälters unterschiedlich bestimmt sind.

8. Kaffeeautomat nach einem der Ansprüche 1 bis 7, **gekennzeichnet durch** der Mahleinheit zugeordnete Ansteuermittel zum Ansteuern der Mahleinheit in einem Mahlbetrieb, der das vollständige Vermahlen des Bohnen-Dosiervolumens und **dadurch** Leeren der Mahleinheit bewirkt, insbesondere **durch** Erfassen eines Motorparameters der Mahleinheit und/oder Vorgeben einer Mindest-Mahldauer.

9. Kaffeeautomat nach einem der Ansprüche 1 bis 8,
**dadurch gekennzeichnet,**
**dass** der Mahleinheit Mittel zum Erfassen eines Mengenparameters der gemahlenen Bohnen, insbesondere eines Mehlvolumens oder eines Mehlgewichts, sowie zum Erzeugen eines Erfassungssignals daraus nachgeschaltet sind,
die Dosiereinheit zum Eintragen des als Reaktion auf ein Dosiersteuersignal veränderbaren Bohnen-Dosiervolumens in die Mahleinheit ansteuerbar ist
und der Kaffeeautomat Steuermittel aufweist, die zum Vergleichen des Erfassungssignals aus einem ersten, durch die Dosiereinheit dosierten Bohnen-Dosiervolumens mit einem Vorgabesignal sowie zum Erzeugen des Dosiersteuersignals für ein nachfolgend zu dosierendes zweites Bohnen-Dosiervolumen als Reaktion auf das Vergleichen ausgebildet sind.

10. Verfahren zum Betreiben des Kaffeeautomaten nach einem der Ansprüche 1 bis 9, **gekennzeichnet durch** die Schritte:
- lineares Bewegen einer Dosierkammer mit konstantem Kammervolumen in eine variable, ein Bohnen-Dosiervolumen bestimmende Eintragsposition relativ zu einem stationären Behälterauslass eines der Bohnenbehälter,
- Eintragen des Bohnen-Dosiervolumens in die Dosierkammer,
- lineares und vertikales Bewegen der Dosierkammer in eine von der Eintragsposition verschiedenen Austragsposition **durch** Antreiben entlang einer Bewegungslängsachse, und
- vollständiges Austragen des Bohnen-Dosiervolumens **durch** gravitatives Leeren der Dosierkammer zur Mahleinheit.

## Claims

1. A coffee machine
comprising a first bean container (42) and a second bean container (43), which is provided separately from the first bean container,
a grinding unit (34) embodied to grind beans from the first and the second bean container,
a brewing unit connected downstream from the grinding unit for ground beans and
conveying means for selectively feeding beans from the first and the second bean container into the grinding unit,
**characterized in that**
the conveying means, which are embodied as metering unit (16, 18), encompass a metering chamber, which comprises a constant chamber volume and which can be moved and positioned vertically by means of a linearly acting drive unit (24, 26, 28) and the bean metering volume of which can be set and/or determined by means of a variable and linear movement stroke of the metering chamber movement, which determines a feeding position,
the metering unit encompasses discharge means (30, 32) for emptying the metering chamber to the grinding unit, said means causing a gravitational feeding, in particular along an inclined surface, in a discharge position of the metering chamber, which differs from the feeding position, and
the linearly acting drive unit is embodied for moving and positioning the metering chamber along a longitudinal movement axis.

2. The coffee machine according to claim 1, **characterized in that** the bean metering volume corresponds to a single or double portioning size of the hot beverage, which can be predetermined by means of the coffee machine, in particular to a bean quantity in the range of between 4g and 40g, more preferably of between 7g and 20g.

3. The coffee machine according to one of claims 1 or 2, **characterized in that** the metering chamber
embodies an inclined pouring surface (20, 22; 64, 66; 95, 96) at least in the discharge position,
and/or that the metering chamber is provided in the feeding and in the discharge position above the grinding unit
and/or that the metering chamber is provided a number of times according to the number of the bean containers and is provided separately for each of the bean containers and is assigned to the latter.

4. The coffee machine according to one of claims 1 to 3, **characterized in that** the drive unit is assigned to a plurality of the metering chambers together, in particular that it encompasses only one drive aggregate for moving or positioning, respectively, the metering chambers.

5. The coffee machine according to one of claims 1 to 4, **characterized in that** the metering chamber is provided in a linearly movable lift and/or carriage unit and that the bean metering volume in the feeding position can be determined by a lift or carriage position, respectively, relative to a container outlet of the first and/or second bean container.

6. The coffee machine according to claim 5, **characterized in that** the lift or carriage unit, respectively, interacts with the grinding unit such that, in the discharge position, an aperture (30, 32) of the metering chamber on the edge and/or bottom side is open towards the grinding unit.

7. The coffee machine according to one of claims 1 to 6, **characterized in that** the variable movement stroke in the feeding position includes a plurality of manually or electronically selectable metering chamber positions, which are a function in particular of a coffee type and/or coffee portion quantity and/or which are designated differently for fillers of the first and second bean container.

8. The coffee machine according to one of claims 1 to 7, **characterized by** activating means, which are assigned to the grinding unit, for activating the grinding unit in a grinding operation, which effects the complete grinding of the bean metering volume and thus the emptying of the grinding unit,
in particular by detecting a motor parameter of the grinding unit and/or by specifying a minimum grinding time.

9. The coffee machine according to one of claims 1 to 8, **characterized in**
**that** means for detecting a quantity parameter of the ground beans, in particular of a grounds volume or of a grounds weight, as well as for generating a detection signal therefrom, are connected downstream from the grinding unit,
the metering unit can be activated for feeding the bean metering volume, which can be changed as a reaction to a metering control signal, into the grinding unit
and the coffee machine encompasses control means, which are embodied for comparing the detection signal from a first bean metering volume, which is metered by the metering unit, to a specification signal, as well as for generating the metering control signal for a second metering volume, which is to be metered subsequently, as a reaction to the comparison.

10. A method for operating a coffee machine according to one of claims 1 to 9, **characterized by** the steps:
- linearly moving a metering chamber comprising a constant chamber volume into a variable feeding position, which determines a bean metering volume, relative to a stationary container outlet of one of the bean containers,
- feeding the bean metering volume into the metering chamber,
- linear and vertical moving of the metering chamber into a discharge position, which differs from the feeding position, by driving along a longitudinal movement axis, and
- complete feeding of the bean metering volume by gravitational emptying of the metering chamber to the grinding unit.

## Revendications

1. Machine à café comprenant
un premier réservoir à grains (42) et un deuxième réservoir à grains (43) prévu de manière séparée du premier réservoir à grains,
une unité de mouture (34) réalisée pour moudre des grains provenant du premier et du deuxième réservoir à grains,
une unité d'infusion placée en aval de l'unité de mouture pour les grains moulus et
des moyens d'acheminement pour introduire de manière sélective dans l'unité de mouture des grains provenant du premier et du deuxième réservoir à grains,
**caractérisée en ce que**
les moyens d'acheminement réalisés sous forme d'unité de dosage (16, 18) comprennent une chambre de dosage de volume constant pouvant être déplacée et positionnée verticalement au moyen d'une unité d'entraînement agissant linéairement (24, 26, 28), dont le volume de dosage de grains peut être ajusté et/ou déterminé par une course de déplacement du déplacement de la chambre de dosage variable et linéaire déterminant une position d'introduction,
l'unité de dosage comprend des moyens d'évacuation (30, 32) pour vider la chambre de dosage vers l'unité de mouture, lesquels moyens d'évacuation provoquent, dans une position d'évacuation de la chambre de dosage différente de la position d'introduction, une évacuation par gravité, en particulier le long d'une surface inclinée, et l'unité d'entraînement agissant linéairement est réalisée pour déplacer et positionner la chambre de dosage le long d'un axe longitudinal de déplacement.

2. Machine à café selon la revendication 1, **caractérisée en ce que** le volume de dosage de grains correspond à une grandeur de division en portions simple ou double de la boisson chaude pouvant être prédéterminée à l'aide de la machine à café, en particulier à une quantité de grains dans la plage entre 4 g et 40 g, de préférence encore entre 7 g et 20 g.

3. Machine à café selon l'une quelconque des revendications 1 et 2, **caractérisée en ce que** la chambre de dosage forme au moins dans la position d'évacuation une surface de déversement inclinée (20, 22 ; 64, 66 ; 95, 96),
et/ou **en ce que** la chambre de dosage est prévue au-dessus de l'unité de mouture dans la position d'introduction et dans la position d'évacuation, et/ou **en ce que** la chambre de dosage est prévue de manière correspondante plusieurs fois pour le nombre des réservoirs à grains et séparément pour chacun des réservoirs à grains et est associée à chacun de ceux-ci.

4. Machine à café selon l'une quelconque des revendications 1 à 3, **caractérisée en ce que** l'unité d'entraînement est associée en commun à une pluralité de chambres de dosage, en particulier ne comprend qu'un groupe d'entraînement pour le déplacement ou le positionnement des chambres de dosage.

5. Machine à café selon l'une quelconque des revendications 1 à 4, **caractérisée en ce que** la chambre de dosage est prévue dans une unité de levage et/ou de glissement mobile linéairement et le volume de dosage de grains dans la position d'introduction est déterminé par une position de levage ou de glissement par rapport à une sortie de réservoir du premier et/ou du deuxième réservoir à grains.

6. Machine à café selon la revendication 5, **caractérisée en ce que** l'unité de levage ou de glissement coopère avec l'unité de mouture de telle sorte que, dans la position d'évacuation, une ouverture (30, 32) du côté des bords et/ou du côté du fond de la chambre de dosage soit ouverte vers l'unité de mouture.

7. Machine à café selon l'une quelconque des revendications 1 à 6, **caractérisée en ce que** la course de déplacement variable dans la position d'introduction inclut une pluralité de positions de chambre de dosage pouvant être sélectionnées manuellement ou électroniquement, lesquelles dépendent en particulier d'un type de café et/ou d'une quantité de portion de café et/ou sont déterminées différemment pour le produit de remplissage du premier et du deuxième réservoir à grains.

8. Machine à café selon l'une quelconque des revendications 1 à 7, **caractérisée par** des moyens de commande associés à l'unité de mouture pour commander l'unité de mouture dans un mode de mouture qui provoque la mouture complète du volume de dosage de grains et par conséquent la vidange de l'unité de mouture, en particulier par détection d'un paramètre de moteur de l'unité de mouture et/ou par prédéfinition d'une durée de mouture minimale.

9. Machine à café selon l'une quelconque des revendications 1 à 8,
**caractérisée en ce que**
des moyens pour détecter un paramètre de quantité des grains moulus, en particulier un volume de mouture ou un poids de mouture, ainsi que pour générer un signal de détection à partir de celui-ci sont placés en aval de l'unité de mouture,
l'unité de dosage peut être commandée pour introduire dans l'unité de mouture le volume de dosage de grains pouvant être modifié en réponse à un signal de commande de dosage,
et la machine à café comprend des moyens de commande qui sont réalisés pour comparer le signal de détection issu d'un premier volume de dosage de grains dosé au moyen de l'unité de dosage avec un signal de consigne ainsi que pour générer le signal de commande de dosage pour un deuxième volume de dosage de grains devant être dosé subséquemment en réponse à la comparaison.

10. Procédé de fonctionnement de la machine à café selon l'une quelconque des revendications 1 à 9, **caractérisé par** les étapes :
- déplacement linéaire d'une chambre de dosage présentant un volume constant dans une position d'introduction variable déterminant un volume de dosage de grains par rapport à une sortie de réservoir fixe de l'un des réservoirs à grains,
- introduction du volume de dosage de grains dans la chambre de dosage,
- déplacement linéaire et vertical de la chambre de dosage dans une position d'évacuation différente de la position d'introduction par entraînement le long d'un axe longitudinal de déplacement, et
- évacuation complète du volume de dosage de grains par vidange par gravité de la chambre de dosage vers l'unité de mouture.
